# EUROPÄISCHE PATENTSCHRIFT

(11) **EP 1 600 058 B1**
(45) Veröffentlichungstag und Bekanntmachung des Hinweises auf die Patenterteilung: **17.08.2011**
(21) Anmeldenummer: 05011179.8
(22) Anmeldetag: 24.05.2005
(51) Int. Cl.: A21C 11/10, A21C 13/02

(54) **Verfahren und Vorrichtung zur Formung eines backfertigen, schlusslosen Teigrings sowie Verfahren zur Herstellung eines Ringgebäcks aus einem derart vorgeformten Teigring**
Process and apparatus for forming a ready-to-bake, connectionless dough ring, and process for making a ring-shaped bakery product from such a pre-shaped dough ring.
Procédé et dispositif pour former un anneau de pâte prêt à cuire et sans connexion, et procédé de fabrication d'un produit de pâtisserie en forme d'anneau à partir d'un anneau de pâte ainsi préformé

(30) Priorität: 29.05.2004 DE 102004026387
(43) Veröffentlichungstag der Anmeldung: 30.11.2005
(73) Patentinhaber: Neuenkirchener Maschinenfabrik Emil Kemper GmbH, 33397 Rietberg (DE)
(72) Erfinder: Peitzmeier, Ulrich, 33415 Verl (DE); Gerhardt, Ulrich, 69517 Abtsteinach (DE)
(74) Vertreter: Hofmann, Matthias

(56) Entgegenhaltungen:
- EP-A- 1 374 685
- DE-A1- 3 712 372
- DE-A1- 4 429 973
- DE-B- 1 215 073
- DE-C1- 19 820 055
- US-A- 2 695 570
- US-A- 3 335 678
- US-A- 3 517 622
- US-A- 3 882 768
- US-A- 4 218 207
- US-A- 6 026 737

## Beschreibung

Die Erfindung betrifft ein Verfahren zur Formung eines backfertigen, schlusslosen Teigrings nach Anspruch 1. Ferner betrifft die Erfindung ein Verfahren zur Herstellung eines Ringgebäcks nach Anspruch 5 sowie eine Vorrichtung zur Formung eines backfertigen, schlusslosen Teigrings nach Anspruch 6.

Ein derartiges Verfahren ist durch offenkundige Vorbenutzung bei der Herstellung von Donuts bekannt. Dort wird zunächst ein Teigband hergestellt, aus dem die Donuts komplett ausgestanzt werden. Da auch eine dichteste Packung derartiger Stanzungen das Teigband nicht lückenlos abdecken kann, verbleibt ein erheblicher Teigrest nach dem Ausstanzen, der entweder ungenutzt bleibt oder aufwendig einer Weiterverarbeitung zugeführt werden muss.

Aus der US 3,517,622 A sind ein Verfahren und eine Vorrichtung zur Formung eines Teigrings bekannt, wobei ein Teigling mittels mehrerer Bearbeitungsstationen geformt wird. Die US 2,695,570 A offenbart eine Vorrichtung und ein Verfahren zur Formung eines Teigrings, wobei aus einem Teigling mittels einer Ausstanz-Station ein erheblicher Teil des Teiglings als Rest ausgestanzt wird, der über ein Transportsystem einer Weiterverarbeitung zugeführt wird.

Es ist daher eine Aufgabe der vorliegenden Erfindung, ein effizienteres Verfahren zur Formung eines backfertigen, schlusslosen Teigrings anzugeben.

Diese Aufgabe ist erfindungsgemäß gelöst durch ein Verfahren mit den Schritten nach Anspruch 1.

Das erfindungsgemäße Teigring-Formungsverfahren löst sich von dem Konzept, zunächst ein Teigband herzustellen. Die Teigringe werden vielmehr aus vorbereiteten einzelnen Teiglingen hergestellt. Dies reduziert den Verschnitt erheblich.

Ein Verdrängen eines Teiglings reduziert die bei der Teigringherstellung verbleibenden Teigreste weiter. Statt das Innenloch aus dem vollen Teigling zu stanzen, wird der Teigling am Ort des Innenlochs zunächst verdrängt, so dass nur noch eine geringe Materialstärke, im günstigsten Fall nur noch eine dünne Teighaut, durchstanzt werden muss. Dies reduziert zudem die Anforderungen an eine Stanzstation.

Das Verdrängen kann dabei durch Ausüben von Druck auf den zentralen Teiglingabschnitt mit einem Druckwerkzeug, insbesondere nach Art eines Stempels, erfolgen. Ein derartiges Verdrängen ist einfach.

Vor dem Ausstanzen und/oder vor dem Verdrängen kann der Teigling derart zentriert werden, dass nach dem Ausstanzen und/oder dem Verdrängen das Innenloch und/oder der Teiglingabschnitt mit reduzierter Teiglingsstärke symmetrisch zentral im Teigling liegen. Dies gewährleistet eine definierte Positionierung des Teiglings vor dem Stanzen und/oder dem Verdrängen.

Das Zentrieren kann dabei mit Hilfe eines definierten Anschlags erfolgen, an dem die Teiglinge vor dem Ausstanzen und/oder Verdrängen zu liegen kommen. Ein derartiges Zentrieren ist unaufwändig.

Nach dem Ausstanzen kann ein Absaugen des ausgestanzten zentralen Teiglingabschnitts erfolgen. Dies gewährleistet ein schnelles und sauberes Entfernen des ausgestanzten zentralen Teiglingabschnitts.

Ein Verfahren nach Anspruch 2 erlaubt ein schonendes Formen der Teiglinge.

Die nach dem Druckausüben in der Praxis erforderliche Entspannungszeit kann beim Verfahren nach Anspruch 3 gleichzeitig zum Gären genutzt werden.

Eine weitere Aufgabe der Erfindung ist es, ein Verfahren zur Weiterverarbeitung des hergestellten Teiglings anzugeben.

Diese Aufgabe ist erfindungsgemäß gelöst durch ein Verfahren nach Anspruch 4.

Die Formung sowie Weiterbearbeitung des Teigrings können erfindungsgemäß vollständig automatisiert ablaufen.

Der ausgestanzte Teigring kann dabei vor dem Nachgären mit Mehl bestreut werden. Dies führt zu einem optisch ansprechenden fertigen Ringgebäck.

Eine weitere Aufgabe der Erfindung ist es, eine Vorrichtung anzugeben, mit der eine automatisierte Verfahrensführung bei der Formung eines backfertigen, schlusslosen Teigrings gewährleistet ist.

Diese Aufgabe ist erfindungsgemäß gelöst durch eine Vorrichtung mit den im Anspruch 5 angegebenen Merkmalen.

Die Vorteile dieser Vorrichtung entsprechen denjenigen, die oben im Zusammenhang mit dem erfindungsgemäßen Verfahren angesprochen wurden. Die einzelnen Stationen der Vorrichtung arbeiten bevorzugt taktweise zusammen. Dies gewährleistet ein definiertes, synchronisiertes Zusammenwirken der einzelnen Verarbeitungsschritte.

Die Vorrichtung kann eine Zentrierstation im Förderweg vor der Stanzstation und/oder der Verdrängungsstation aufweisen, wobei die Zentrierstation ein Zentrieren des Teiglings vor dem Ausstanzen und/oder vor dem Verdrängen derart bewirkt, dass nach dem Ausstanzen und/oder dem Verdrängen das Innenloch und/oder der verdrängte Teiglingabschnitt symmetrisch zentral im Teigling liegt.

Die Zentrierstation kann einen Anschlag aufweisen, an dem die Teiglinge vor dem Ausstanzen und/oder dem Verdrängen zu liegen kommen.

Zum definierten Abführen des ausgestanzten zentralen Teiglingabschnitts kann die Stanzstation zwischen einer Stanzstellung und einer Abgabestellung umgestellt, insbesondere verschwenkt werden. Eine derart umstellbare Stanzstation kann bevorzugt eine Mehrzahl von Stanzwerkzeugen aufweisen, wobei dann, wenn eines der Stanzwerkzeuge von der Stanz- in die Abgabestellung umgestellt wird, ein anderes Stanzwerkzeug automatisch in die Stanzstellung nachrückt. In der Abgabestellung kann das Stanzwerkzeug beispielsweise mit einer Absaugeinheit zum Absaugen des ausgestanzten zentralen Teiglingabschnitts zusammenarbeiten.

Die Stanzstation und/oder die Verdrängungsstation können so ausgestaltet sein, dass sie wahlweise in den Bearbeitungsprozess für die Teiglinge zuschaltbar sind. Diese Ausgestaltung führt dazu, dass die Vorrichtung wahlweise für Teigringe oder auch für entsprechend geformte Teiglinge ohne Innenloch eingesetzt sein kann. Die Vorrichtung kann daher zum Beispiel gleichzeitig zur Herstellung von Donuts und von Berlinern eingesetzt werden. Bei der Berlinerherstellung, d.h. der Herstellung eines backfertigen Teiglings ohne Innenloch, werden die Stanzstation und/oder die Verdrängungsstation einfach ausgelassen. Diese Auslassung kann bei der angesprochenen wahlweisen Zuschaltbarkeit dadurch erfolgen, dass die Stanzstation und/oder die Verdrängungsstation inaktiviert werden. Alternativ kann die Fördereinrichtung so ausgeführt sein, dass die Stanzstation und/oder die Verdrängungsstation wahlweise von den Teiglingen nicht angefahren werden. Hierdurch kann mit der Fördereinrichtung auch ein Umweg um die Stanzstation und/oder die Verdrängungsstation bereitgestellt werden.

Ausführungsbeispiele der Erfindung werden nachfolgend anhand der Zeichnung näher erläutert. In dieser zeigen:
- Fig. 1: eine interne Details zeigende Seitenansicht einer Teigbearbeitungsanlage;
- Fig. 2: eine Aufsicht auf die Anlage nach Fig. 1;
- Fig. 3: eine Ausschnittsvergrößerung von Fig. 1 im Bereich eines für Teiglinge formgebenden Anlagenteils;
- Fig. 4: eine zu Fig. 1 ähnliche Ansicht einer weiteren Teigbearbeitungsanlage; und
- Fig. 5: eine Aufsicht auf die Teigbearbeitungsanlage nach Fig. 4.

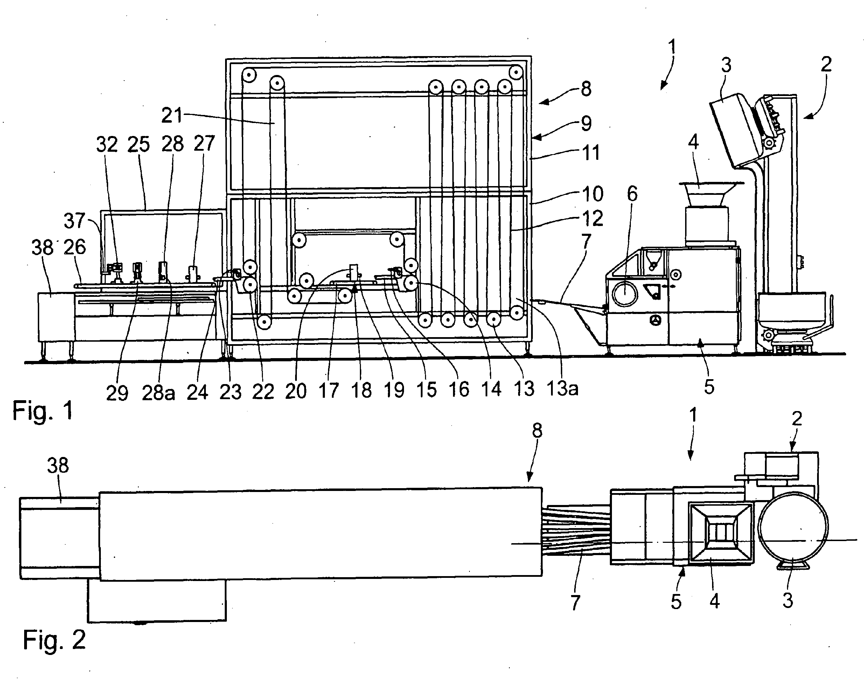

In den Figuren 1 bis 3 ist eine erste Ausführungsform einer Teigbearbeitungsanlage 1 dargestellt. Diese umfasst eine Kneteinrichtung 2 zum Kneten von Teig. Die Kneteinrichtung 2 weist einen anheb- und schwenkbaren Trog 3 auf, der in Figur 1 sowohl in einer Knet- als auch in einer angehobenen und verschwenkten Abgabestellung dargestellt ist. In der Abgabestellung des Trogs 3 befindet sich unter diesem ein Zuführtrichter 4 einer Portionier- und Rundwirkeinrichtung 5. Die Portionier- und Rundwirkeinrichtung 5 umfasst eine Rundwirkstation 6. Diese ist durch ein sechsstrahliges Übergabeförderband 7 mit einer modular aufgebauten Gär- und Formvorrichtung 8 verbunden. Die weiteren Bearbeitungsstationen der Teigbearbeitungsanlage 1 verarbeiten parallel sechs Reihen von Teiglingen.

Mit dem Abgabeende des Übergabeförderbandes 7 in Förderverbindung steht eine Gehänge-Fördereinrichtung 9, die in zwei übereinander angeordneten Teilmodulen 10, 11 der Gär- und Formvorrichtung 8 untergebracht ist. Die Gehänge-Fördereinrichtung 9 umfasst eine Mehrzahl von nicht dargestellten Gehängen zur Aufnahme von Teiglingen. Die Gehänge sind mit einer Förderkette 12 verbunden, die über eine Mehrzahl von Umlenkrollen 13 endlos umlaufend geführt ist. Beim Fördern läuft die Förderkette 12 in den Teilmodulen 10, 11 im wesentlichen im Uhrzeigersinn um.

Ausgehend vom Abgabeende des Übergabeförderbandes 7 verläuft die Förderkette 12 in einer Zwischengärstation 13a mehrmals auf und ab, bis ein Paar 14 von direkt übereinander liegenden Umlenkrollen 13 erreicht wird. Dort werden die Gehänge von einem Mitnehmer umgedreht, so dass die hierin befindlichen Teiglinge auf einen Förderbandabschnitt 15 gelangen. Diesem zugeordnet ist eine erste Andrückwalze 16, welche die unter ihr auf dem Förderbandabschnitt 15 vorbeilaufenden Teiglinge so vorformt, dass diese nicht undefiniert auf dem Förderbandabschnitt rollen können.

Vom Förderbandabschnitt 15 gelangen die Teiglinge auf einen weiteren Förderbandabschnitt 17. Diesem zugeordnet ist eine Druckstation 18. Diese weist eine Druckplatte 19 auf, die geführt von einem Ständer 20 angetrieben und bewegbar ist. Vom Abgabeende des weiteren Förderbandabschnitts 17 gelangen die Teiglinge nach der Druckstation 20 wieder in ein Gehänge der Gehänge-Fördereinrichtung 9. Die Gehänge-Fördereinrichtung 9 ist mit dem Betrieb der Förderbandabschnitte 15, 17 so synchronisiert, dass immer dann, wenn Teiglinge vom weiteren Förderbandabschnitt 17 abgegeben werden, ein Gehänge am Abgabeende des Förderbandabschnitts 17 zur Aufnahme der Teiglinge bereitsteht.

Über weitere Umlenkrollen 13 ist die Förderkette 12 im Anschluss an die Übergabestelle am Abgabeende des Förderbandabschnitts 17 nochmals nach oben und unten geführt. Hierbei durchlaufen die Gehänge eine zweite Zwischengärstation 21. Im Anschluss an diese passieren die Gehänge ein weiteres Paar 22 von Umlenkrollen 13 sowie eine weitere Andrückwalze 23 mit einem zugehörigen Förderbandabschnitt 24. Mit letzterem werden die Teiglinge in eine Formeinrichtung 25 der Gär- und Formvorrichtung 8 transportiert, die in einem weiteren Teilmodul von dieser untergebracht ist.

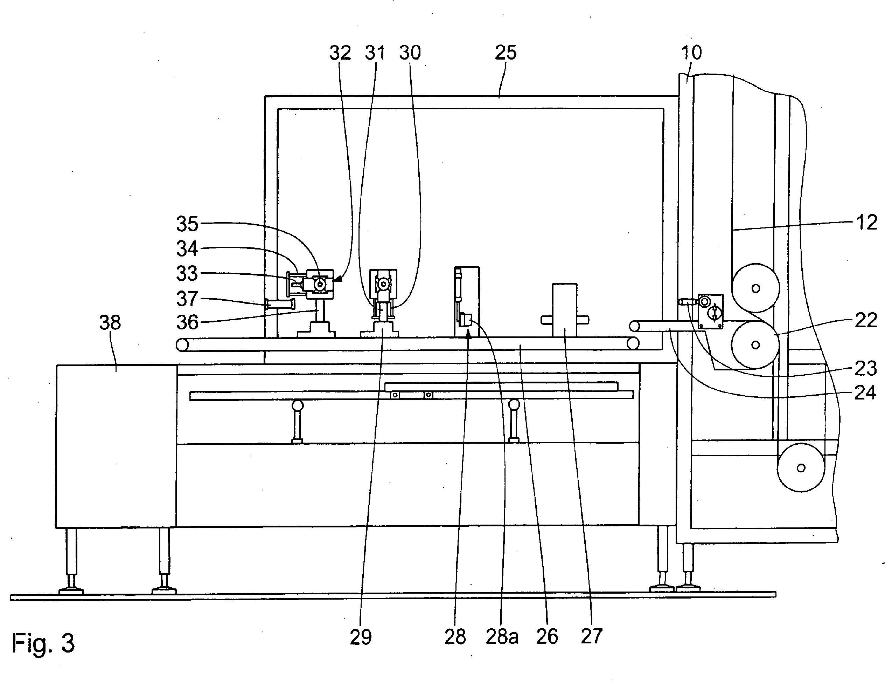

Figur 3 zeigt die Formeinrichtung 25 stärker im Detail. Vom Förderbandabschnitt 24 gelangen die Teiglinge zunächst auf einen weiteren Förderbandabschnitt 26. Dort passieren sie zunächst eine weitere Druckstation 27, die genauso aufgebaut ist wie die Druckstation 18. Anschließend werden die Teiglinge vom Förderbandabschnitt 26 hin zu einer Zentrierstation 28, in der die runden Teiglinge zentriert ausgerichtet werden, transportiert. Die Zentrierstation 28 weist zum Zentrieren der Teiglinge einen Anschlag 28a auf. Im Anschluss hieran werden die zentrierten Teiglinge vom Förderband 26 hin zu einer Verdrängungsstation 29 gefördert. Letztere umfasst ein in Figur 3 nicht sichtbares angetriebenes hubbewegbares Druckwerkzeug in Form eines Stempels mit balligem Ende. Ein Träger 30 des Druckwerkzeugs ist an einem Ständer 31 der Verdrängungsstation 29 montiert. In der Verdrängungsstation 29 erfolgt durch Drücken des Druckwerkzeugs auf den Teigling ein Verdrängen eines zentralen Teigabschnitts nach außen derart, dass die Teiglingsstärke im Zentrum des Teiglings gegenüber dem sonstigen Teigling reduziert ist.

Nach der Verdrängungsstation 29 wird der so vorgeformte Teigling mit dem Förderbandabschnitt 26 hin zu einer Stanzstation 32 gefördert. Diese weist ein Stanzwerkzeug 33 in Form eines angetriebenen hubbewegbaren Stanzstifts auf. Das Stanzwerkzeug 33 ist an einem Träger 34 montiert, der um eine zur Zeichenebene der Figur 3 senkrechte Schwenkachse 35 zu einem Ständer 36 der Stanzstation 32 schwenkbar gelagert ist. Das Stanzwerkzeug 33 mit dem Träger 34 ist in Figur 3 in einer Abgabestellung dargestellt, in der das Stanzwerkzeug 33 relativ zur Stanzstellung in Figur 3 um 90° im Uhrzeigersinn um die Schwenkachse 35 verschwenkt ist. In der Stanzstellung erstreckt sich das Stanzwerkzeug 33 daher wie das Druckwerkzeug der Verdrängungsstation 29 vertikal, also senkrecht zur Förderebene, die vom Förderbandabschnitt 26 vorgegeben ist. In der Abgabestellung liegt unter dem freien Ende des Stanzwerkzeugs 33 ein weiterer Förderbandabschnitt 37. Dieser dient dazu, den ausgestanzten Teiglingabschnitt, der vom Stanzwerkzeug 33 abgestoßen wird, aufzunehmen und abzutransportieren. Die Stanzstation 32 kann zwei Stanzwerkzeuge 33 aufweisen, wobei immer dann, wenn das eine der beiden Stanzwerkzeuge 33 von der Stanzstellung in die Abgabestellung umgestellt wird, das andere der beiden Stanzwerkzeuge 33 in die Stanzstellung nachrückt. Zur Abgabe des ausgestanzten Teiglingabschnitts kann die Stanzstation 32 auch mit einer nicht dargestellten Absaugeinheit zum Absaugen des ausgestanzten zentralen Teiglings zusammenarbeiten. Dieses Absaugen kann alternativ zum Abstoßen des ausgestanzten zentralen Teiglingabschnitts erfolgen.

Im Anschluss an die Stanzstation 32 wird der ausgestanzte Teigling vom Förderbandabschnitt 26 zur weiteren Verarbeitung weitertransportiert. Dem Abgabeende des Förderbandabschnitts 26 ist eine Ablagestation 38 zugeordnet, in der die ausgestanzten Teiglinge auf Bleche abgelegt werden. Die Teiglinge werden dann manuell in Gärschränke zum Nachgären eingebracht.

Mit der Teigbearbeitungsanlage 1 können schlusslose, backfertige Teigringe, z.B. Donuts, wie folgt hergestellt werden: Zunächst wird Teig in der Kneteinrichtung 2 geknetet und über den Zuführtrichter 4 automatisch in die Portionier- und Rundwirkeinrichtung 5 eingegeben. In letzterer erfolgt zunächst eine Portionierung des eingegebenen Teigs in einzelne Teiglinge, die dann in der Rundwirkstation 6 rundgewirkt werden. Die rundgewirkten Teiglinge gelangen anschließend sechsreihig über das Übergabeförderband 7 in die Gehänge der Gehänge-Fördereinrichtung 9 und werden in der ersten Zwischengärstation 13a zwischengegärt. Die Teiglinge gelangen dann gewendet auf den Förderbandabschnitt 15 und werden von der Andrückwalze 16 leicht angedrückt, so dass sie nicht undefiniert rollen können. Anschließend werden die Teiglinge in der Druckstation 18 durch das Zusammenwirken der Druckplatte 19 mit dem Förderbandabschnitt 17 flächig stärker gedrückt, so dass sie eine abgeplattete runde Form erhalten. Es wird also ein Rundstück geformt, dessen Quererstreckung quer zur Druckrichtung größer ist als seine Höhe längs der Druckrichtung. Anschließend gelangen die gedrückten Teiglinge wieder in die Gehänge der Gehänge-Fördereinrichtung 9 und werden in der zweiten Zwischengärstation 21 weiter zwischengegärt. Sodann werden die Teiglinge wieder gewendet und gelangen auf den weiteren Förderbandabschnitt 24, wo sie ein weiteres Mal mit der Andrückwalze 23 leicht angedrückt werden, so dass sie nicht undefiniert rollen können. Es folgt ein weiteres stärkeres Drücken in der Druckstation 27, wobei die Teiglinge eine stärker abgeplattete Form erhalten. Nach dem Drücken der Teiglinge in den Druckstationen 18, 27 erfolgt jeweils ein Entspannen der Teiglinge. Anschließend werden die um eine vertikale Achse rotationssymmetrischen Teiglinge in der Zentrierstation 28 zentriert. Dies erfolgt mit Hilfe des Anschlags 28a. Nach dem Zentrieren gelangen die Teiglinge in die Verdrängungsstation 29, wo der zentrale Teiglingabschnitt mit Hilfe des Druckwerkzeugs verdrängt wird. Dann gelangen die Teiglinge in die Stanzstation 32, wo der zentrale Teiglingabschnitt, der dann aufgrund des Verdrängens nur noch als dünne Haut vorliegt, mit Hilfe des Stanzwerkzeugs 33 ausgestanzt wird. Der verdrängte Teiglingabschnitt sowie das durch das Stanzen gebildete Innenloch im Teigling liegen zentral in diesem. Das Stanzwerkzeug 33 wird nach dem Stanzen in die in Figur 3 gezeigte Abgabestellung überführt und gibt den ausgestanzten Teiglingabschnitt auf den Förderabschnitt 37 ab. Der nach dem Ausstanzen entstandene Teigring wird dann in der Ablagestation 38 auf Bleche abgelegt. Nach dem Nachgären werden die Teigringe entweder tiefgefroren oder gleich zu Donuts gebacken.

Die Teigbearbeitungsanlage 1 arbeitet gedachtet. Insbesondere der Förderbandabschnitt 26 fördert taktweise, wobei das Drücken in der Druckstation 27, das Verdrängen in der Verdrängungsstation 29 und das Stanzen in der Stanzstation 32 erfolgen, wenn die Teiglinge ruhen. Die getastete Förderung der Förderbänder 7, 15, 17, 24 und 26 ist mit der Förderung der Gehänge-Fördereinrichtung 9 synchronisiert.

Die Teigbearbeitungsanlage 1 nach den Figuren 1 bis 3 weist zwei Druckstationen 18, 27 auf. Alternativ kann auch eine andere Anzahl von Druckstationen vorgesehen sein.

Zur Herstellung von Berlinern können die Verdrängungsstation 29 und die Stanzstation 32 und gegebenenfalls auch die Druckstationen 18 und 27 derart inaktiviert werden, dass die Teiglinge diese Stationen passieren, ohne dort geformt zu werden. Die Teigbearbeitungsanlage 1 kann ansonsten genauso betrieben werden, wie oben im Zusammenhang mit der Herstellung von Donuts beschrieben. Auf diese Weise können mit der Teigbearbeitungsanlage 1 auch Berliner hergestellt werden.

Die Teigbearbeitungsanlage 1 nach den Figuren 1 bis 3 hat für Donuts eine Stundenleistung von etwa 6.000 Teiglingen pro Stunde und bei der Bearbeitung von Berlinern eine Stundenleistung von etwa 3.000 Berlinern pro Stunde. Die Zwischengärdauer in den Zwischengärstationen 13a und 21 beträgt bei der Donutherstellung etwa 20 Minuten und bei der Berlinerherstellung etwa 40 Minuten.

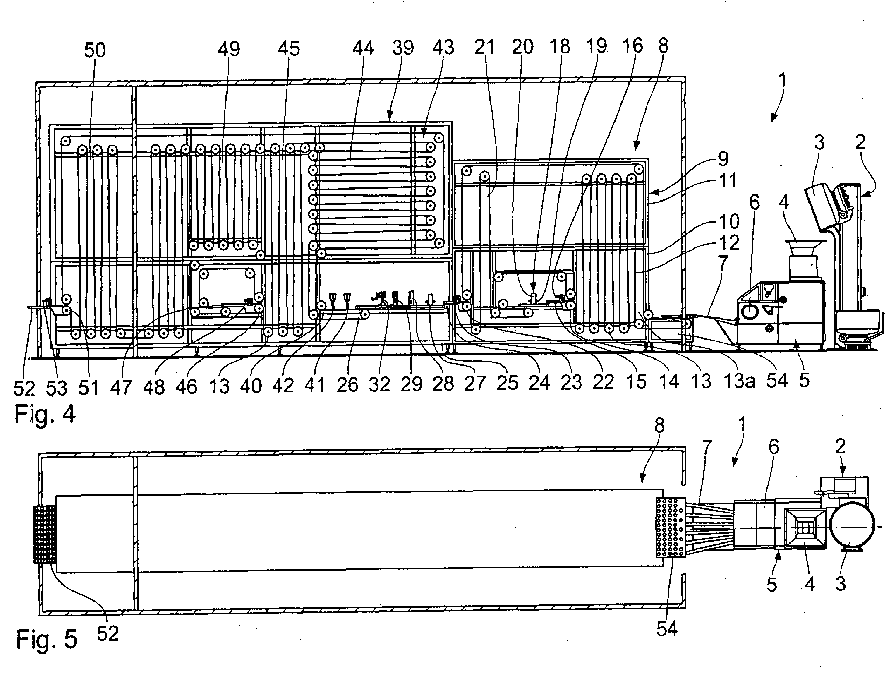

Die Figuren 4 und 5 zeigen eine alternative Teigbearbeitungsanlage. Komponenten, die denjenigen entsprechen, die vorstehend schon unter Bezugnahme auf die Figuren 1 bis 3 erläutert wurden, tragen die gleichen Bezugszeichen und werden nicht nochmals im einzelnen diskutiert.

Bei der Teigbearbeitungsanlage 1 nach den Figuren 4 und 5 ist die Formeinrichtung 25 modular integriert in eine mehrere Teilmodule aufweisende Bestreuungs- und Nachgäreinrichtung 39. In dieser gelangen die Teiglinge nach dem Förderbandabschnitt 26 auf einen weiteren Förderbandabschnitt 40. Während der Förderung auf dem Förderbandabschnitt 40 passieren die Teiglinge zwei Mehlbestreuungsstationen 41, 42, in der die vorgeformten Donuts bzw. Berliner mit Mehl bestreut werden.

Die bestreuten Teiglinge werden dann vom Förderbandabschnitt 40 hin zu einer weiteren Gehänge-Fördereinrichtung 43 gefördert, die entsprechend der Gehänge-Fördereinrichtung 9 aufgebaut und in der Bestreuungs- und Nachgäreinrichtung 39 untergebracht ist. Die Gehänge laufen bei der Gehänge-Fördereinrichtung 43 in der Darstellung nach Figur 4 ebenfalls im wesentlichen im Uhrzeigersinn um. Ausgehend vom Abgabeende des Förderbandabschnitts 40 gelangen die Gehänge zunächst in eine erste Nachgärstation 44. In dieser verläuft die Förderkette 12 der Gehänge-Fördereinrichtung 43 im wesentlichen hin und her. Anschließend gelangen die Gehänge in eine weitere Nachgärstation 45, in der die Gehänge im wesentlichen von oben nach unten verlaufen. Schließlich passieren die Gehänge ein Paar 46 von Umlenkrollen, dessen Funktion den Umlenkrollenpaaren 14 und 22 entspricht. Die in den Gehängen befindlichen Teiglinge werden daher gewendet auf einen Förderbandabschnitt 47 übergeben und mittels einer weiteren Andrückwalze 48 angedrückt, so dass ein undefiniertes Rollen der Teiglinge auf dem Förderbandabschnitt 47 vermieden ist.

Vom Abgabeende des Förderbandabschnitts 47 gelangen die Teiglinge wiederum in ein Gehänge der Gehänge-Fördereinrichtung 43. Die Gehänge-Fördereinrichtung 43 ist mit dem Förderbandabschnitt 47 synchronisiert, wie dies im Zusammenhang mit der Gehänge-Fördereinrichtung 9 und den Förderbändern 15 und 17 schon beschrieben wurde. Ausgehend vom Abgabeende des Förderbandabschnitts 47 werden die Gehänge hin zu einer weiteren Nachgärstation 49 über dem Förderbandabschnitt 47 gefördert, in dem die Förderkette 12 der Gehänge-Fördereinrichtung 43 im wesentlichen von oben nach unten verläuft. Von dort gelangen die Gehänge in eine Nachgär- und Kühlstation 50, in der die Teiglinge zur Hautbildung gekühlt werden. Die Gehänge passieren anschließend ein weiteres Paar 51 von Umlenkrollen, wobei sie entleert werden. Die gekühlten Teiglinge werden dann auf einen weiteren Förderbandabschnitt 52 übergeben, dem eine weitere Andrückwalze 53 zugeordnet ist, die ein undefiniertes Rollen der Teiglinge auf dem Förderbandabschnitt 52 durch Andrücken der Teiglinge verhindert. Vom Abgabeende des Förderbandabschnitts 52 gelangen die gekühlten Teiglinge dann hin zu einem nicht dargestellten Fett-Backofen.

Als weiteren Unterschied zur Teigbearbeitungsanlage 1 nach den Figuren 1 bis 3 weist die Teigbearbeitungsanlage 1 nach den Figuren 4 und 5 nach dem Übergabeförderband 7 eine als Taktband ausgeführte Umsortiereinrichtung 54 auf, welche die rundgewirkten Teiglinge, die nach dem Übergabeförderband 7 sechsreihig vorlagen, auf zwölf Reihen umsortiert. Die Teigbearbeitungsanlage 1 nach den Figuren 4 und 5 kann alternativ sechs-oder zwölfreihig betrieben werden. Im zwölfreihigen Betrieb hat die Teigbearbeitungsanlage 1 nach den Figuren 4 und 5 bei der Donutbearbeitung eine Stundenleistung von 12.000 Teiglingen pro Stunde. Werden Berliner bearbeitet, so sind 6.000 Teiglinge pro Stunde möglich. Die Zwischengärdauer ist im Vergleich zur Teigbearbeitungsanlage 1 nach den Figuren 1 bis 3 unverändert. Die Endgärdauern betragen bei der Teigbearbeitungsanlage 1 nach den Figuren 4 und 5 35 Minuten bei der Donutherstellung und 70 Minuten bei der-Berlinerherstellung. In der Kühleinheit der Nachgär-und Kühlstation 50 verweilen die Teiglinge bei Donuts 5 Minuten und bei Berlinern 10 Minuten.

## Patentansprüche

1. Verfahren zur Formung eines backfertigen, schlusslosen Teigrings mit folgenden Schritten:
- Rundwirken eines Teiglings,
- Gären des Teiglings,
- flächiges Ausüben von Druck auf den Teigling von zwei Seiten zur Ausformung eines Rundstücks, dessen Quererstreckung quer zur Richtung des Drucks größer ist als seine Höhe in Richtung des Drucks,
- Entspannen des gedrückten Teiglings,
- Verdrängen eines zentralen Teiglingabschnitts nach außen, wobei die Teiglingsstärke dort, wo nachfolgend ein Ausstanzen erfolgt, gegenüber dem sonstigen Teigling reduziert ist,
- Ausstanzen eines Innenlochs in den entspannten, vorgeformten Teigling zur Herstellung des Teigrings.

2. Verfahren nach Anspruch 1, **dadurch gekennzeichnet, dass** die Schritte Druckausüben und Entspannen mehrmals hintereinander, insbesondere zweimal oder dreimal hintereinander, erfolgen.

3. Verfahren nach Anspruch 2, **dadurch gekennzeichnet, dass** zwischen den Druckausübungsschritten ein weiterer Gärschritt erfolgt.

4. Verfahren zur Herstellung eines Ringgebäcks aus einem nach einem der Ansprüche 1 bis 3 vorgeformten Teigring, **gekennzeichnet durch** folgende Schritte:
- Nachgären des ausgestanzten Teigrings;
- Backen des nachgegärten Teigrings zum Ringgebäck.

5. Vorrichtung zur Formung eines backfertigen, schlusslosen Teigrings mit einem Verfahren nach einem der Ansprüche 1 bis 4, mit:
- einer Rundwirkstation (6),
- einer Gärstation (13a, 21; 13a, 21, 44, 45, 49, 50),
- einer Druckstation (18, 27) zum flächigen Ausüben von Druck auf den Teigling von zwei Seiten,
- einer Stanzstation (32),
- einer Fördereinrichtung (7, 9, 15, 17, 24, 26; 7, 9, 15, 17, 24, 26, 40, 43, 47, 52) zur Förderung von Teiglingen zwischen den Stationen (6, 13a, 18, 21, 27, 32; 6, 13a, 18, 21, 27, 32, 44, 45, 49, 50),
- einer Verdrängungsstation (29) im Förderweg vor der Stanzstation (32), wobei die Verdrängungsstation (29) derart ausgeführt ist, dass vor dem Ausstanzen ein Verdrängen eines zentralen Teiglingabschnitts nach außen derart erfolgt, dass die Teiglingsstärke dort, wo nachfolgend das Ausstanzen erfolgt, gegenüber dem sonstigen Teigling reduziert ist, wobei die Verdrängungsstation (29) ein Druckwerkzeug mit balligem Ende aufweist.

6. Vorrichtung nach Anspruch 5, **gekennzeichnet durch** mehrere Druckstationen (18, 27), insbesondere zwei oder drei Druckstationen zum flächigen Ausüben von Druck auf den Teigling auf zwei Seiten, die derart nacheinander in einem Förderweg des Teiglings angeordnet sind, dass der Teigling die mehreren Druckstationen (18, 27) durchläuft.

7. Vorrichtung nach Anspruch 6, **gekennzeichnet durch** eine Gärstation (21) im Förderweg zwischen den Druckstationen (18, 27).

8. Vorrichtung nach Anspruch 5, **dadurch gekennzeichnet, dass** das Druckwerkzeug nach Art eines Stempels ausgeführt ist.

## Claims

1. A method of forming a ready-to-bake, endless dough ring, comprising the following steps:
- round kneading a dough piece;
- fermenting the dough piece;
- exerting flattening pressure on both sides of the dough piece for a round dough piece to form, the extension of which transverse to the direction of pressure exceeding the height thereof in the direction of pressure;
- allowing the pressed dough piece to relax;
- displacement of a central portion of the dough piece outwards,
wherein the thickness of the dough piece, as compared to the rest of the dough piece, is reduced where subsequent punching takes place;
- punching an inside hole in the relaxed, pre-formed dough piece for a dough ring to be produced.

2. A method according to claim 1, **characterized in that** the steps of exerting pressure and relaxation take place several times in succession, in particular two or three times in succession.

3. A method according to claim 2, **characterized in that** another step of fermenting takes place between the steps of exerting pressure.

4. A method of producing a baked ring article from a dough ring pre-formed according to one of claims 1 to 3, **characterized by** the following steps:
- secondarily fermenting the punched-out dough ring;
- baking the secondarily fermented dough ring for obtaining a baked ring article.

5. An apparatus for forming a ready-to-bake, endless dough ring by a method according to one of claims 1 to 4, comprising
- a round-kneading station (6);
- a fermenting station (13a, 21; 13a, 21, 44, 45, 49, 50);
- a pressure station (18, 27) for flattening pressure being exerted on both sides of the dough piece;
- a punching station (32);
- a conveyor (7, 9, 15, 17, 24, 26; 7, 9, 15, 17, 24, 26, 40, 43, 47, 52) for dough pieces to be transferred between the stations (6, 13a, 18, 21, 27, 32; 6, 13a, 18, 21, 27, 32, 44, 45, 49, 50),
- a displacement station (29) disposed on the way of conveyance upstream of the punching station (32), the displacement station (29) being embodied such that displacement of a central portion of the dough piece outwards takes place prior to punching such that the thickness of the dough piece is reduced as compared to the rest of the dough piece where subsequent punching takes place, wherein the displacement station (29) comprises a die with a convex end.

6. An apparatus according to claim 5, **characterized by** several pressure stations (18, 27), in particular two or three pressure stations for flattening pressure to be exerted on both sides of the dough piece, the pressure stations (18, 27) being disposed successively on a way of conveyance of the dough piece such that the dough piece travels through the several pressure stations (18, 27).

7. An apparatus according to claim 6, **characterized by** a fermenting station (21) on the way of conveyance between the pressure stations (18, 27).

8. An apparatus according to claim 5, **characterized in that** the die is designed as a stamp.

## Revendications

1. Procédé pour former un anneau de pâte prêt à cuire, sans connexion, avec les étapes suivante
- mise en forme de boule d'un pâton,
- fermentation du pâton,
- application d'une pression en surface sur deux côtés du pâton pour le façonnage d'une pièce circulaire dont l'extension transverse par rapport au sens de la pression est supérieure à sa hauteur dans le sens de la pression,
- la détente du pâton ayant subi la pression,
- le déplacement vers l'extérieur d'une partie centrale du pâton, l'épaisseur du pâton dans la zone qui sera ultérieurement emboutie étant réduite par rapport au reste du pâton,
- l'emboutissage d'un orifice intérieur dans le pâton détendu, préformé, pour former l'anneau de pâte.

2. Procédé selon la revendication 1 **caractérisé en ce que** les étapes d'application d'une pression et de détente ont lieu plusieurs fois consécutivement, en particulier deux ou trois fois consécutivement.

3. Procédé selon la revendication 2 **caractérisé en ce qu'**une étape de fermentation supplémentaire a lieu entre les étapes d'application de pression.

4. Procédé pour fabriquer un produit de pâtisserie en forme d'anneau à partir d'un anneau de pâte préformé selon l'une des revendications de 1 à 3, **caractérisé par** les étapes suivantes:
- fermentation additionnelle de l'anneau de pâte embouti ;
- cuisson de l'anneau de pâte ayant subi la fermentation complémentaire pour donner un produit de pâtisserie en forme d'anneau.

5. Dispositif pour former un anneau de pâte prêt à cuire, sans connexion, avec un procédé selon l'une des revendications de 1 à 4, avec :
- une étape de mise en forme de boule (6),
- une étape de fermentation (13a, 21 ; 13a, 21, 44, 45, 49, 50),
- une étape de mise sous pression (18, 27) pour exercer une pression en surface sur deux côtés du pâton,
- une étape d'emboutissage (32),
- un dispositif de convoyage (7, 9, 15, 17, 24, 26 ; 7, 9, 15, 17, 24, 26, 40, 43, 47, 52) pour le transport des pâtons entre les étapes (6, 13a, 18, 21, 27, 32 ; 6, 13a, 18, 21, 27, 32, 44, 45, 49, 50),
- une étape de repoussage (29) sur le trajet de convoyage avant l'étape d'emboutissage (32), l'étape de repoussage (29) étant conçue de sorte qu'un repoussage de la partie centrale du pâton s'effectue vers l'extérieur de sorte que l'épaisseur du pâton à l'endroit où sera ultérieurement réalisé l'emboutissage est réduite par rapport au reste du pâton, l'étape de repoussage (29) comportant un outil de presse avec une extrémité en forme de balle.

6. Dispositif selon la revendication 5, **caractérisé en ce que** plusieurs étapes de mise sous pression (18, 27), en particulier deux ou trois étapes de mise sous pression, sont ainsi agencées les unes derrière les autres sur un trajet de convoyage du pâton pour exercer une pression en surface sur deux côtés du pâton, de sorte que le pâton traverse les étapes de mise sous pressions multiples (18, 27).

7. Dispositif selon la revendication 6 **caractérisé par** une étape de fermentation (21) sur le trajet de convoyage entre les étapes de mise sous pression (18, 27).

8. Dispositif selon la revendication 5 **caractérisé en ce que** l'outil de presse est conçu comme une sorte de tampon.
